# EUROPEAN PATENT APPLICATION

(11) **EP 1 926 026 A2**
(43) Date of publication of application: **28.05.2008**
(21) Application number: 07022758.2
(22) Date of filing: 23.11.2007
(51) Int. Cl.: G06F 17/24, G06F 9/44

(54) **Application management tool**

(30) Priority: 24.11.2006 IN MU19352006
(71) Applicant: Accenture Global Services GmbH, 8200 Schaffhausen (CH)
(72) Inventor: Mudaliar, Jayprakash Narendra, Hyderabad Andhra Pradesh 500032 (IN)
(74) Representative: Fennell, Gareth Charles

(57) **Abstract**

An application management system comprises a graphical user interface that allows a user thereof to provide form configuration inputs that, in turn, are used to generate form metadata. The form configuration inputs may include various control options as well as control configuration options for control elements to be included in a given form. Control validator options may be provided such that the form metadata is further based on selected control validator options. Further still, validation conditions embodying business-related validation rules for selected target controls may be established. The form metadata is provided to a module library comprising a plurality of form control modules and a configuration engine. Based on the form metadata, the configuration engine configures instantiatians of one or more of the form control modules and generates an application based at least in part on one or more configured control modules.

## Description

### FIELD OF THE INVENTION

The present invention relates generally to software development tools and, in particular, to an application management tool for the development of form-based user interfaces.

### BACKGROUND OF THE INVENTION

Generally, development, testing and management of software applications is a complex, time consuming and expensive process. Currently, a significant number of projects are directed towards Web-based or "WINDOWS" operating system applications. In applications of this type, a significant component of the application is the so-called graphical user interface (GUI). Because the user interface constitutes that portion of the application that a user most frequently deals with, great care must to taken to ensure that the user interface functions properly and in an intuitive, easy to use manner.

Given the importance of such user interfaces, a great deal of developer time is typically spent coding and testing the software necessary to implement them. This burden is increased in the event that changes to the user interface are required, or if errors arc, detected during the development of or (worse) after the deployment of the software. As a result, software developers arc continuously looking for ways to improve the efficiency of the software development process.

One aspect of most user interfaces is that they share a significant degree of common functionality that is, essentially, repeated for different projects albeit in different configurations unique to each application. For example, user interfaces almost always employ one or more so-called controls (also referred to herein as control elements), i.e., interface elements that a user of a computer can interact with. Examples of such controls include buttons, list boxes, check boxes, radio buttons, menus, tool bars, text boxes, etc. Although tools currently exist, such as the "VISUAL STUDIO" development tool, that allow developers to minimize the amount of coding necessary to implement such control functionality, these tools are not capable of avoiding the coding process entirely.

Additionally, many user interfaces incorporate so-called "business functionality" whereby operation of such controls is dictated, in part, by specific requirements unique to the purpose of the application. For example, an on-line retailer may develop a user interface incorporating text boxes for the entry of information regarding potential customers' residential addresses. It may be a business requirement of the retailer that it get a valid email address before the customer is allowed to submit a purchase request. To this end, validation rules may be employed as part of the user interface. As known in the art, validation rules or validators, are used to check the validity or syntactical correctness of input provided to a given control clement. Thus, in the example given above, a validator rule can be established to test the syntactical correctness of the input provided to an email textbox when it is determined that a "Submit Purchase Request" button has been selected. As in the case of controls themselves, the software related to such business-related validation rules typically requires, a substantial amount of time to develop and test.

Thus, it would be advantageous to develop a technique that allows developers to deploy form-based user interfaces using common control elements and corresponding business-related validation rules in a manner that allows them to avoid or minimize the substantial effort involved in coding, testing and managing such components.

### SUMMARY OF THE INVENTION

The present invention provides a technique for developing forms-based user interfaces using an application management system. In particular, the application management system comprises a graphical user interface that allows a user thereof to provide form configuration inputs that, in turn, are used to generate form metadata. For example, the form configuration inputs may include various control options (i.e., different types of controls) as well as control configuration options for control elements to be included in a given form. Likewise, control validator options may be provided such that the form metadata is further based on selected control validator options. Further still, validation conditions embodying business-related validation rules for selected target controls may be established through the selection of test controls and corresponding test control events. The form metadata generated in this manner may be provided to a module library comprising a plurality of form control modules and a configuration engine Based on the form metadata, the configuration engine configures instantiations of one or more of the form control modules and generates an application based at least in part on one or more configured control modules. In this manner, the present invention allows a developer to quickly specify the functionality of a form to be used in a graphical user interface without the need for extensive coding and testing.

### BRIEF DESCRIPTION OF THE DRAWINGS

The features of the present invention are set forth with particularity in the appended claims. The invention itself, together with further features and attended advantages, will become apparent from consideration of the following detailed description, taken in conjunction with the accompanying drawings. One or more embodiments of the present invention are now described, by way of example only, with reference to the accompanied drawings wherein like reference numerals represent like elements and in which:

FIG. 1 is a block diagram of an apparatus that may be used to implement the present invention;

FIG. 2 is as block diagram of an application management system in accordance with the present invention;

FIG 3 is a flow chart illustrating processing for generating form metadata in accordance with the present invention;

FIC. 4 is a flow chart illustrating processing for developing business rule validations in accordance with the present invention;

FIG. 5 is an illustration of an exemplary graphical user interface useful for the development of forms and form metadata in accordance with the present invention; and

FIG. 6 is an illustration of an exemplary form to which techniques in accordance with the present invention may be beneficially applied.

### DETAILED DESCRIPTION OF THE PRESENT EMBODIMENTS

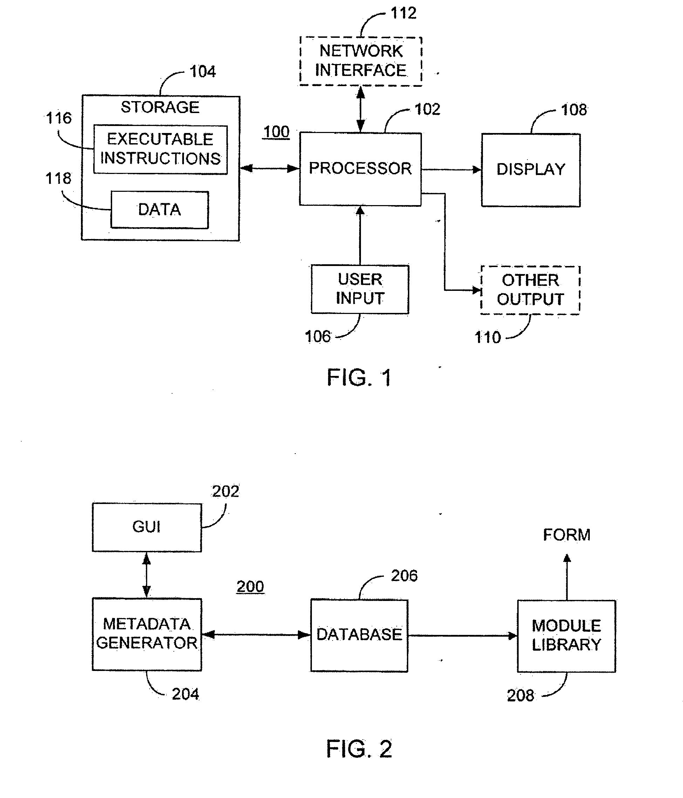

A more detailed understanding of the present invention may be obtained with further references to FIGs. 1-6, as described below. Referring now to FIG. I, an apparatus suitable for implementing the present invention is further illustrated. In particular, the apparatus 100, which may comprise a general purpose computer or similar processing platform, comprises a processor 102 in communication with a storage device 104, a user input 106, a display 108, other output mechanisms 110 and a network interface 112. The processor 102, which may comprise a microprocessor, microcontroller, digital signal processor, similar devices or combinations thereof, preferably operates under the control executable instructions 116 stored in the storage device 104. Similarly, during operation, the processor 102 operates upon stored data 118, also included in the storage device 104, as well as other input data that may be provided via the user input 106 or the network interface 114. Further still, based on the operations undertaken by the processor 102, data may be output via the display I08 or the other output mechanism 112, as commonly known in the art. The storage device 104 may comprise one or more memory devices including, but not limited to, random access memory (RAM), read only memory (ROM), removable magnetic or optical storage media, hard drives, etc.

The user input 106 allows a user to interact with the apparatus 100 and, in particular, to control processing implemented by the processor 102 via one or more user inputs. In particular, the user input 106 may comprise a user selection device such as a mouse, touch screen, touch pad or similar such devices as known to those having ordinary skill in the art. The display 108 may comprise any display device typically used with a computer, either integral or external, such as a flat-panel display, cathode ray tube or type of monitor. The other output mechanisms 112 may include lights, enunciators, speakers, or other components commonly found in computers that provide information to users thereof The network interface 114, as known in the art, allows the device 100 to be coupled to public or private communication network, such as the World Wide Web or proprietary networks such as enterprise local area or wide area networks, respectfully.

Referring now to FIG. 2, an application management system 200 for generating forms, preferably for use in constructing graphical user interfaces, is further illustrated. In particular, the system 200 comprises a graphical user interface 202 in communication with a metadata generator 204, which in turn is in communication with a module library 208 via a database 206. With the exception of the database 206, which may comprise a mass storage device as known in the art, the other elements illustrated in FIG. 2 are preferably implemented using known software programming techniques. However, it is understood that other techniques may be used to implement the illustrated components including, but not limited to, programmable logic arrays, application specific integrated circuits (ASICS), or other techniques known to those of skill in the art

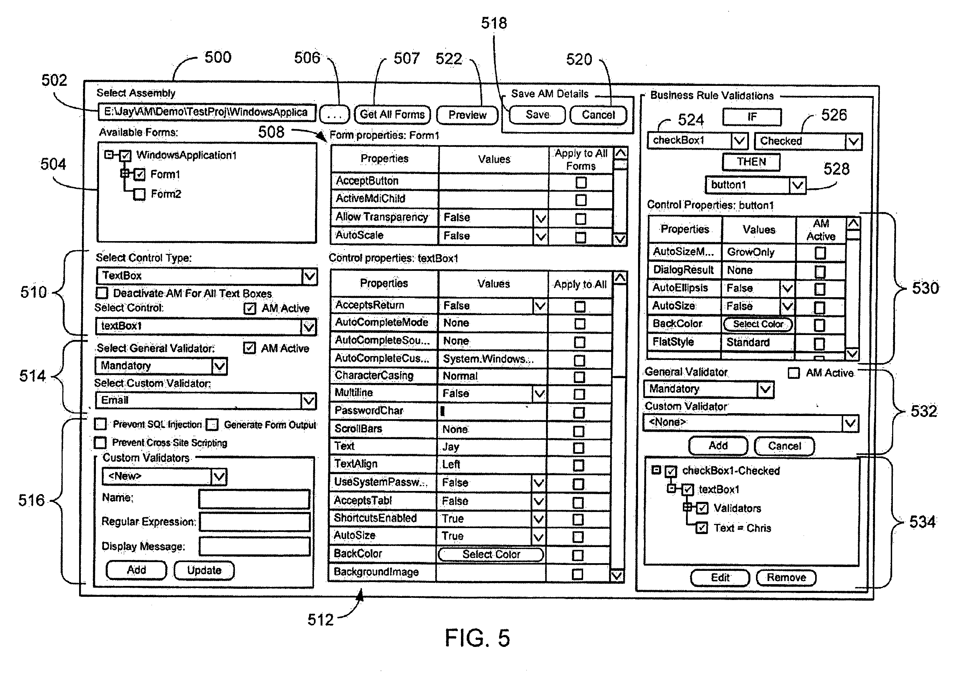

As described below with reference to FIG. 5, the graphical user interface 202 provides a means, in conjunction with a user selection device preferably embodied by the user input 106, to manipulate various form and control configuration inputs as well as control validation inputs, as described in greater detail below. The graphical user interface 202 is displayed, for example on the display 108 illustrated in FIG. I, using known programming techniques. The metadata generator 204 generates form metadata (which metadata may be used by a configuration engine (described in greater detail below) when configuring one or more form control modules) based on inputs received via the graphical user interface 202 concerning the identity of controls to be included in a given form, the values assigned to the various properties available for each selected control as: well as the validators and corresponding properties used to validate the selected controls. As used herein, form metadata is data or information representative of the details of an application, including form and/or control elements and properties/validations thereof, or business rules based thereon, and specific configuration values applied by a user (developer) thereto.

In a presently preferred embodiment, the metadata generator 204 generates form metadata through the use of "reflection", which, as known to those having ordinary skill in the art, allows a software program to "learn" about, and possibly modify, its own construction. In one embodiment of the present invention, reflection is enabled through an application programming interface (API) exposed by the Microsoft NET platform that may be used to access information stored in an application executable or dynamic link library, discussed in further detail below. In the context of the present invention, reflection is used by the metadata generator 204 to access the properties of an application (i.e., the forms, controls, etc.) and thereby generate the form metadata using known techniques. The database 206 preferably comprises extensible markup language (XML) configuration file or an appropriately programmed Structure Query Language (SQL) server. The database 206 stores form metadata generated by the metadata generator 204. More generally, the form metadata for a plurality of forms may be associated together as an application or assembly stored in the database 206 for later recall for further editing using the graphical user interface 202 in conjunction with the metadata generator 204, or for instantiation of the desired GUI embodied by the application/assembly using the module library 208.

The module library 208 comprises a configuration engine as well as a plurality of form control modules used by the configuration engine when instantiating a form. Each form control module is a program corresponding to one of the available control elements For example, one form control module is provided for a TextBox, another for a ComboBox, another for a CheckBox, etc. In particular, the configuration engine configures one or more of the form control modules based on the specific metadata that captures the functionality of the form. In a presently preferred embodiment, the configuration engine and corresponding form control modules are implemented as a so-called dynamic link library (DLL). Generally, when an application or form is initialized or loaded for execution, the configuration engine included in the module library 208 reads the appropriate metadata corresponding to the desired form from the database 206, uses the metadata to identify the appropriate form control modules and instantiates the various necessary form control modules and configures them according to the metadata settings. In this manner, the present invention provides great flexibility in generating forms typically associated with user interfaces and, equally importantly, avoids the need for extensive coding exercises typically associated with software development projects.

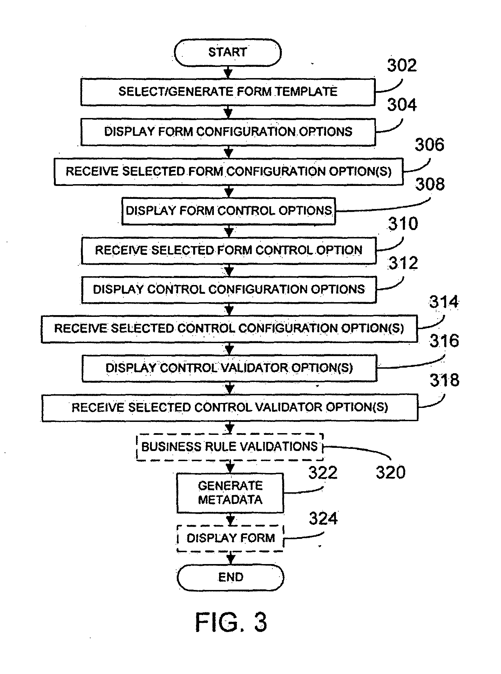

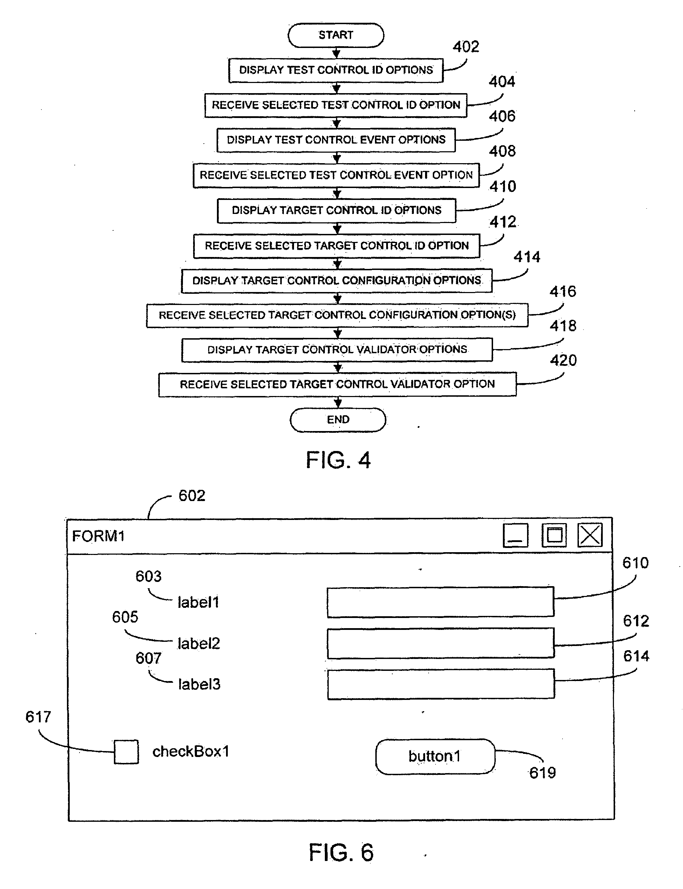

Referring now to FIGs. 3-6, operation of the present invention will be described in greater detail. Unless indicated otherwise, the processing illustrated in FIGS. 3-5 is preferably implemented using stored software instructions executed by one or more appropriate processors., for example, as part of the executable instructions 116 included in the storage device 104. However, as known to those skilled in the art, the processing of FlGs. 3-5 may be implemented using any of a number of known techniques including those described previously. Additionally, although the processing blocks illustrated in FIG. 3 (and FIG. 4, described below) are illustrated in a particular order, those having ordinary skill in the art will appreciate that the processing can be performed in different orders. For example, the blocks described below in which something is "displayed" may be performed essentially simultaneously.

Referring now to block 302, processing begins when a user of the graphical user interface 202 selects a form or an application/assembly. For example, with reference to FIG. 5, an exemplary graphical user interface 500 is illustrated. As illustrated therein, a user of the interface 500 may access one or more preexisting assembles or forms using an assembly input mechanism 502 and a corresponding selection box 504. As known in the art, a browse button 506 or a "Get All" button 507 may be provided, thereby allowing a user of the interface 500 to access previously stored applications or assemblies. Techniques for generating new applications/assemblies are well known in the art. In a presently preferred embodiment, the functionality enabled by the application management system 200 is provided in a newly created application/assembly by making specific reference to the software embodying the metadata generator 204 within the application/assembly. More specifically, a form is first created using any of a variety of known authoring tools such as "VISUAL STUDIO" by Microsoft Corporation or other authoring tools compatible with other operating systems-an example of which is illustrated in FIG. 6-and the resulting assembly compiled using known techniques. As shown in FIG. 6, the form 602, labeled in this case as "Form1" is provided with a number of control elements including a plurality of labels 603-607 and a corresponding plurality of input textboxes 610-614. Further still, a checkbox 617 is provided as well as a button 619. Normally, further configuration of the functionality of the form 602 would require direct modifications of the code underlying the form 602. However, in accordance with the presently preferred embodiment, the only modification to the underlying software is to make a reference to the metadata generator 204, an example of which is illustrated in Table 1 below where the reference to the metadata generator 204 is illustrated as "AMLibrary":

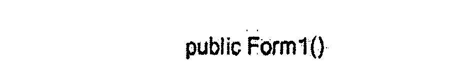

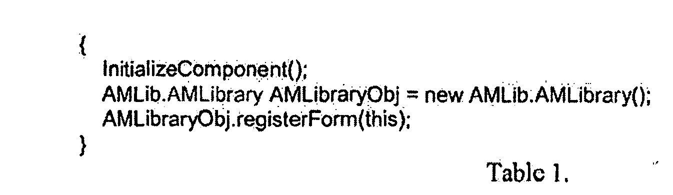

Once created, the application/assembly with the appropriate reference to the metadata generator 204 may be stored in accordance with known techniques.

Referring once again to FIG. 3, processing continues, at block 304 where, having selected a desired form, a plurality of form configuration options for the selected form are displayed. The form configuration options describe the various properties that may be applied to the form as a whole. For example, again with reference to FIG. 5, a plurality of form configuration options 508 are shown for the exemplary form 602. Using known programming techniques, the form configuration options 508 are illustrated using a scrollable list of properties and corresponding input fields in which values may be entered. Additionally, as shown, further input fields are available to apply the selected properties and their corresponding values to all forms within the given application.

Thereafter, at block 306, indications of one or more selected form configuration options (preferably received via a user selection device in conjunction with the user interface 500) are received. As shown in FIG. 5, this is accomplished when the user of the interface 500 selects one or more of the listed properties within the form configuration options 508 and enters corresponding values. Note that the exemplary interface 500 provides different input mechanisms for entering values corresponding to various listed properties, e.g., input textboxes, drop-down menus, etc.

Continuing at block 308, a plurality of form control options arc displayed. The form control options allow a user of the interface to select one or more control types and one or more individual controls within the selected form. With reference to FIG. 5, this is illustrated by the plurality of form control options 510 that may be selected using two distinct mechanisms. In particular, various control types may be selected using a drop-down menu, including, for example, a text box, as shown. Having selected a particular type of control, a user may specify one or more specifically named controls of that control type. In the example shown, a user has selected the textbox labeled "textBox1", e.g., a first textbox 610 as illustrated in FIG. 6. Note that, in the implementation shown, the functionality established by the application management tool of the present invention may be separately activated or deactivated at any of a variety of separate levels using the illustrated checkboxes labeled "AM Active". For example, as shown, application management functionality may be enabled at a control type level, or at the level of individual controls. In this manner, selected portions of an assembly, form or control may be configured using the management functionality of the present invention as determined by the developer. Regardless, in response to the plurality of form control options 510 displayed, a user may provide an indication of one or more selected form control options as illustrated at block 310.

Having selected one or more specific controls to configure within the form, processing continues at block 312 where a plurality of control configuration options are displayed for the selected form control option. As known in the art, each control element typically has one or more properties that may be configured to establish operational behavior of instantiations of the corresponding control element. Referring once again to FIG. 5, this is illustrated by the plurality of control configuration options 512 corresponding to the selected control "textBox1". Once again, in addition to the various properties for that control, various corresponding input fields exist allowing the user of the interface 500 and to enter specific values for one or more of the properties. Additionally, as before, check boxes are available allowing the configured properties to be applied to all control elements of the selected control type.

Processing continues at block 316 where one or more control validator options corresponding to the selected control are displayed via the user interface and, subsequently, indications of one or more selected control validator options may be received at block 318. As known in the art, validation rules or validators are used to check the validity or syntactical correctness of a given control element. Referring once again to FIG. 5, one or more control validator options 514 that may be applied to the selected control element are illustrated in the form of pull-down menus divided into two presently preferred categories. In particular, a pull-down menu for a general validator is provided, as well as a pull down menu for custom validators. As noted above, the various validator options displayed arc determined, using known techniques, based on the selected control, In the example illustrated, the "mandatory" validator is illustrated as a general validator (which, in this example, would operate to verify that some data has been entered in "textBox1"), whereas a custom "e-mail" validator (which, in this example, would operate to verify that the syntax of any data entered into the "textBox1" text box conforms with a valid email address) is displayed for the custom validator. In an additional preferred embodiment, a custom validator definition input mechanism 516 is provided whereby a user can define new custom validators using known techniques. For example, as shown, check boxes are provided which allow a user to enable various functionalities for the custom validator. Additionally, new custom validators may be defined using regular expressions as known in the art, and assigned names and display messages for future use.

At block 320, one or more business rule validations may be defined as described in greater detail below with reference to FIG. 4. Generally, business rule validations allow a user to define conditions that cause one or more of the defined controls to be validated in accordance with anticipated usage of the form. Thereafter, at block 322, form metadata is generated based on the selected inputs described above. For example, with reference to FIG. 5, this is accomplished when a user of the interface 500 select a save button 618 thereby causing the metadata generator 204 to generate the metadata as described above. Additionally, a cancel button 520 is also provided thereby allowing the user of the interface 500 to discard any previous changes made to the form, if desired. Additionally, the save button 518 causes the form metadata generated by the metadata generator 204 to be saved to the database 206. Optionally, at block 324, the form corresponding to the generated metadata may be displayed through selection of a preview button 522 that causes the configuration engine within the module library 208 to access the corresponding metadata stored in the database 206 and instantiate the requisite form control modules in accordance with the retrieved metadata.

Referring now to FIG. 4, processing in accordance with the present invention for generating business rule validation metadata is further illustrated. In the context of the present invention, business rule validations are validations that may be applied to one or more control elements based on user-defined conditions. As used herein, the control elements to be validated are referred to as target controls, whereas the control elements used to define the conditions for applying the requisite validations are defined as test controls. Thus, at block 402, a plurality of test control identification options are displayed and, in response at block 404, an indication of a selected test control identification option is received. This is illustrated in FIG. 5 where the plurality of test control identification options 524 are illustrated in the form of a pull-down menu. In the example shown, a control labeled "checkBox1" has been selected. In a similar vein, as illustrated by blocks 406 and 408, a plurality of test control event options are displayed and, in response thereto, an indication of a selected test control event option is received. Referring to the example of FIG. 5, a plurality of test control event options 526 are likewise displayed as a drop-down menu from which a user of the interface 500 may select a suitable test control event option. In the example shown, a "Checked" option has been selected. Together, the selected control identification option (i.e., "checkBox1") and the selected control event option (i.e., "Checked"), in this case, establish a validation condition of "when checkBox1 is checked". Validation conditions determine when a particular validation or control properties are to be executed on a selected target control clement.

Referring once again to FIG. 4, at blocks 410 and 412, a plurality of target control identification options are displayed and, in response thereto, an indication of a selected target control identification is thereafter received. With reference to FIG. 5, this is illustrated by a plurality of target control identification options 528 implemented using a pull-down menu in which a target control identified as "button1" has been selected. In a similar vein to the plurality of control configuration options 512 described above, a plurality of target control configuration options is displayed at block 414 and, at block 416, and indication of one or more selected target control configuration options is received. Referring once again to FIG. 5, the plurality of target control configuration options 530 may be displayed as a scroll list illustrating the various properties and corresponding value input fields and, in the presently preferred embodiment, corresponding application management activation check boxes. The properties configured according to the control configuration options 530 are set (executed) when the validation condition is satisfied.

Finally, at blocks 418 and 420, a plurality of target control validator options are displayed and, in response thereto, an indication of a selected target control validator option is thereafter received. The target control validator options are essentially identical to those described above, i.e., both general and custom validator selections are available. However, the selected target control validator option(s) are applied only upon satisfaction of the validation condition defined by the selected control identification option and the selected control event option. Once again referring to FIG. 5, satisfaction of the validation condition described above ("when checkBox1 is Checked") cause the selected target control validator to be applied to the target control, i.e., "button1".

Further referring to FIG. 5, in addition to the other mechanisms 524-532 for defining business rule validations, a business rule validation editing section 534 may be provided. In accordance with known techniques, the business rule validation editing section 534 provides a user with another mechanism for managing (i.e., editing, activating, deactivating, deleting, etc. selected properties or validations) business rule validations For example, checkboxes in the editing section 534 may be used to activate or deactivate some or all of the options that have otherwise been configured using the other input mechanisms 524-532. In this manner, users of the application management system are provided a great degree of flexibility in quickly defining business rule validations.

As described above, the present invention provides a technique for developing forms-based user interfaces using an application management system. This is achieved by providing a metadata generator that, in response to inputs received via a graphical user interface, generates form metadata that captures user configuration inputs for various settable properties and validators of the form and controls found therein, as well as business rule validators. For at least these reasons, the present invention represents an advancement over prior art techniques.

While the particular preferred embodiments of the present invention have been shown and described, it will be obvious to those skilled in the art that changes and modifications may be made without departing from the teachings of the invention. It is therefore contemplated that the present invention cover any and all modifications, variations or equivalents that fall within the scope of the basic underlying principles disclosed above and claimed herein.

## Claims

1. In a computer system having a graphical user interface including a display and a user selection device, a method for generating form metadata for a form comprising at least one control, the method comprising:
displaying, on the display, a plurality of form control options corresponding to the form;
receiving, via the user selection device, an indication of a selected form control option of the plurality of form control options;
displaying, on the display, a plurality of control configuration options corresponding to the selected form control option;
receiving, via the user selection device, an indication of at least one selected control configuration option of the plurality of control configuration options; and
generating, responsive to the selected form control option and the at least one selected control configuration option, the form metadata.

2. The method of claim 1, further comprising:
configuring a form control module, corresponding to the selected form control option, based on the form metadata.

3. The method of claim 1, further comprising:
displaying, on the display, at least one form selection option; and
receiving, via the user selection device, an indication of a selected form option of the at least one form selection option, the selected form option corresponding to the form.

4. The method of claim 1, further comprising:
displaying, via the display, a plurality of form configuration options corresponding to the form; and
receiving, via the user selection device, an indication- of at least one selected form configuration option of the plurality of form configuration options,
wherein generating the form metadata is further responsive to the at least one selected form configuration option.

5. The method of claim 1, further comprising:
displaying, via the display, at least one control validator option corresponding to the selected form control option; and
receiving, via the user selection device, an indication of at least one selected control validator option of the at least one control validator option,
wherein generating the form metadata is further responsive to the at least one selected control validator option.

6. The method of claim 5, wherein displaying the at least one control validator option further comprises displaying at least one general control validator option.

7. The method of claim 5, wherein displaying the at least one control validator option further comprises displaying at least one custom control validator option.

8. The method of claim 7, further comprising:
displaying, via the display, at least one custom validatordet1riition input mechanism;
receiving, via the user selection device and the at least one custom validator definition input mechanism, custom validator definition data that defines a custom validator.

9. The method of claim 1, further comprising:
displaying, via the display, a plurality of first control identification options;
receiving, via the user selection device, an indication of a selected first control identification of the plurality of first control identification options;
displaying, via the display, a plurality of first control event options corresponding to the selected first control identification,
receiving, via the user selection device, an indication of a selected first control event option of the plurality of first control event options;
displaying, via the display, a plurality of second control identification options; and
receiving, via the user selection device, an indication of a selected second control identification of the plurality of second control identification options,
wherein the selected first control identification and the selected first control event option define a validation condition for a second control corresponding to the selected second control identification, and wherein generating the form metadata is further responsive to the validation condition.

10. The method of claim 9, further comprising:
displaying, on the display, a plurality of second control configuration options corresponding to the selected second control identification; and
receiving, via the user selection device, indication of at least one selected second control configuration option of the plurality of second control configuration options,
wherein generating the form metadata is further responsive to the at least one selected second control configuration option.

11. The method of claim 9, further comprising:
displaying, via the display, at least one second control validator option corresponding to the selected second control identification; and
receiving, via the user selection device; indication of a selected second control validator option of the at least one second control validator option,
wherein generating the form metadata is further responsive to the selected second control validator option.

12. The method of claim 1, further comprising:
generating an image based on the form metadata as used to configure a form control module; and
displaying, via the display, the image.

13. In a computer system having a graphical user interface including a display and a user selection device, a method for generating form metadata for a form comprising at least one control, the method comprising:
displaying, via the display, a plurality of first control identification options;
receiving, via the user selection device, an indication of a selected first control identification of the plurality of first control identification options;
displaying, via the display, a plurality of first control event options corresponding to the selected first control identification;
receiving, via the user selection device, an indication of a selected first control event option of the plurality of first control event options;
displaying, via the display, a plurality of second control identification options;
receiving, via the user selection device, an indication of a selected second control identification of the plurality of second control identification options, wherein the selected first control identification and the selected first control event option define a validation condition for a second control corresponding to the selected second control identification; and
generating, responsive to the validation condition, the form metadata.

14. The method of claim 13, further comprising:
displaying, on the display, a plurality of second control configuration options corresponding to the selected second control identification; and
receiving, via the user selection device, indication of at least, one selected second control configuration option of the plurality of second control configuration options,
wherein generating the form metadata is further responsive to the at least one selected second control configuration option.

15. The method of claim 13, further comprising:
displaying, via the display, at least one second control validator option corresponding to the selected second control identification; and
receiving, via the user selection device, indication of a selected second control validator option of the at least one second control validator option,
wherein generating the form metadata is further responsive to the selected second control validator option.

16. The method of any of claims 13-15, further comprising:
configuring a form control module, corresponding to the second control, based on the form metadata.

17. A system for generating a form to be presented on a computer display, comprising:
a graphical user interface including a display operative to receive, via a user selection device, form configuration inputs associated with at least one control included in the form;
a metadata generator, in communication with the graphical user interface, operative to generate form metadata based on the configuration inputs;
a module library, configured to receive the form metadata, comprising a plurality of form control modules and a configuration engine, wherein the configuration engine is operative to configure at least one form control module of the plurality of form control modules based on the form metadata to provide at least one configured control module, and wherein the configuration engine generates an application embodying functionality of the form and comprising the at least one configured control module.

18. The system of claim 17, further comprising:
a database, in communication with the metadata generator and the module library, operative to store the form metadata.

19. The system of claim 17, wherein the form metadata is represented in an Extensible Markup Language format.

20. The system of claim 17, wherein the configuration inputs comprise control properties inputs and control validation inputs, and wherein the metadata generator is further operative to generate the form metadata comprising control properties metadata based on the control properties inputs and control validation metadata based on the control validation inputs.

21. The system of claim 17, wherein the graphical user interface is further operative to display the form on the computer display.

22. A computer-readable medium having stored thereon executable instructions that, when executed by a computer, cause the computer to:
display a plurality of form control options corresponding to a form;
receive an indication of a selected form control option of the plurality of form control options;
display a plurality of control configuration options corresponding to the selected form control option;
receive an indication of at least one selected control configuration option of the plurality of control configuration options; and
generate, responsive to the selected form control option and the at least one selected control Configuration option, form metadata for the form.

23. The computer-readable medium of claim 22 further comprising executable instructions that, when executed by the computer, cause the computer to:
configure a form control module, corresponding to the selected form control option, based on the form metadata.

24. The computer-readable medium of claim 22, further comprising executable instructions that, when executed by the computer, cause the computer to:
display, on the display, at least one form selection option; and
receive an indication of a selected form option of the at least one form selection option, the selected form option corresponding to the form.

25. The computer-readable medium of claim 22, further comprising executable instructions that, when executed by the computer, cause the computer to:
display a plurality of form configuration options; and
receive an indication of at least one selected form configuration option of the plurality of form configuration options,
wherein generating the form metadata is further responsive to the at least one selected form configuration option.

26. The computer-readable medium of claim 22, further comprising executable instructions that, when executed by the computer, cause the computer to:
display at least one control validator option corresponding to the selected form control option; and
receive an indication of at least one selected control validator option of the at least one control validator option,
wherein generating the form metadata is further responsive to the at least one selected control validator option.

27. The computer-readable medium of claim 22, further comprising executable instructions that, when executed by the computer, cause the computer to:
display a plurality of first control identification options;
receive an indication of a selected first control identification of the plurality of first control identification options;
display a plurality of first control event options corresponding to the selected first control identification;
receive an indication of a selected first control event option of the plurality of first control event options;
display a plurality of second control identification options; and
receive an indication of a selected second control identification of the plurality of second control identification options,
wherein the selected first control identification and the selected first control event option define a validation condition for a second control corresponding to the selected second control identification, and wherein generating the form metadata is further responsive to the validation condition.

28. The computer-readabte medium of claim 27, further comprising executable instructions that, when executed by the computer, cause the computer to:
display a plurality of second control configuration options corresponding to the selected second control identification; and
receive an indication of at least one selected second control configuration option of the plurality of second control configuration options,
wherein generating the form metadata is further responsive to the at least one selected second control configuration option.

29. The computer-readable medium of claim 27, further comprising executable; instructions that, when executed by the computer, cause the computer to:
display at least one second control validator option corresponding to the selected second control identification; and
receive an indication of a selected second control validator option of the at least one second control validator option,
wherein generating the form metadata is further responsive to the selected second control validator option.

30. The computer-readable medium of claim 22, further comprising executable instructions that, when executed by the computer, cause the computer to:
generate an image based on the form metadata as used to configure a form control module; and
display the image.

31. A computer-readable medium having stored thereon executable instructions that, when executed by a computer, cause the computer to:
display a plurality of first control identification options corresponding to a form;
receive an indication of a selected first control identification of the plurality of first control identification options;
display a plurality of first control event options corresponding to the selected first control identification;
receive an indication of a selected first control event option of the plurality of first control event options;
display a plurality of second control identification options corresponding to the form;
receive an indication of a selected second control identification of the plurality of second control identification options, wherein the selected first control identification and the selected first control event option define a validation condition for a second control corresponding to the selected second control identification; and
generate, responsive to the validation condition, form metadata for the form.

32. The computer-readable medium of claim 31, further comprising executable instructions that, when executed, cause the computer to:
display a plurality of second control configuration options corresponding to the selected second control identification; and
receive indication of at least one selected second control configuration option of the plurality of second control configuration options,
wherein generating the form metadata is further responsive to the at least one selected second control configuration option.

33. The computer-readable medium of claim 31, further comprising executable instructions that, when executed, cause the computer to:
display at least one second control validator option corresponding to the selected second control identification; and
receive indication of a selected second control validator option of the at least one second control validator option,
wherein generating the form metadata is further responsive to the selected second control validator option.

34. The method of any of claims 31-33, further comprising executable instructions that, when executed, cause the computer to:
configure a form control module, corresponding to the second control, based on the form metadata.
